# FASCICULE DE BREVET EUROPEEN

(11) **EP 1 257 458 B1**
(45) Date de publication et mention de la délivrance du brevet: **16.11.2005**
(21) Numéro de dépôt: 01903963.5
(22) Date de dépôt: 16.01.2001
(51) Int. Cl.: B62B 3/18

(54) **PANIER POUR CHARIOT DE MAGASIN EN LIBRE SERVICE**
KORB FÜR EINKAUFSWAGEN
TROLLEY BASKET FOR SELF-SERVICE SHOP

(30) Priorité: 23.02.2000 FR 0002239; 28.03.2000 FR 0003879
(43) Date de publication de la demande: 20.11.2002
(73) Titulaire: Six Innovation, 59240 Dunkerque (FR)
(72) Inventeur: Teeten, Philippe, 59380 Coudekerque Village (FR)
(74) Mandataire: Hennion, Jean-Claude
(86) Numéro de dépôt international: PCT/FR2001/000134
(87) Numéro de publication internationale: WO 2001/062574

(56) Documents cités:
- US-A- 3 706 460

## Description

L'invention se rapporte à un panier pour chariot de magasin en libre service.

Classiquement, un chariot utilisé dans les magasins en libre service comprend un châssis qui, muni de roues, porte un panier.

Ce panier est obtenu à partir de fils mis en forme et, notamment, soudés les uns aux autres pour délimiter un fond, une paroi frontale, une paroi arrière et les deux parois latérales gauche et droite du panier.

Pour permettre aux chariots de s'emboîter les uns dans les autres, pour les ranger l'un derrière l'autre, notamment, le panier a une section qui, depuis la paroi frontale vers la paroi arrière, augmente régulièrement.

Ainsi, depuis la paroi frontale, les deux parois latérales divergent et ont une hauteur croissante et le fond est incliné vers l'arrière.

Ainsi, vu de dessus, le panier a une forme de trapèze isocèle, la grande base étant matérialisée par la paroi arrière.

Vu de coté, le panier a également une forme de trapèze.

Une telle forme est assimilable à un tronc de pyramide.

La paroi arrière est articulée en sa partie supérieure de sorte que l'extrémité avant d'un deuxième chariot entrant en contact avec la paroi arrière de ce chariot fait basculer progressivement cette paroi arrière vers l'avant permettant ainsi l'emboîtement des chariots.

Des dispositions sont également utilisées pour l'emboîtement des châssis.

A ce jour, de nombreuses surfaces de vente en libre service proposent trois tailles de chariot, l'utilisateur choisit ainsi le chariot qu'il estime adapté à ses besoins momentanés.

Les chariots doivent être rangés par taille, ce qui est une contrainte pour les utilisateurs.

Comme il n'est pas rare que le choix d'un petit chariot s'avère inapproprié, on a réalisé des chariots possédant un panier de volume variable.

Pour modifier la capacité d'un chariot, il est connu d'équiper sa face avant d'un panier supplémentaire (voir par exemple le document US-A-3706460).

Celui-ci est alors, par exemple, monté basculant autour d'un axe de rotation.

Une telle solution est d'un usage peu pratique.

L'invention a pour objet un panier de chariot de magasin en libre service, lequel panier de volume variable comprend un fond, une paroi frontale, une paroi arrière et deux parois latérales gauche et droite, avec une section verticale qui, depuis la paroi frontale vers la paroi arrière, augmente suivant les deux axes principaux, ce panier comportant deux parties, une partie arrière fixe et une partie avant mobile, ce panier étant caractérisé en ce que la partie avant comprend :
- une paroi inférieure formée essentiellement d'éléments longilignes qui, s'étendant selon l'axe longitudinal du panier, coopèrent par des moyens de guidage en translation selon l'axe longitudinal du panier, avec le fond de la partie arrière du panier,
- prolongeant cette paroi inférieure pour s'étendre dans le plan de la paroi frontale, un support portant des moyens de guidage en translation selon un axe horizontal et parallèle à la paroi frontale,
- des éléments longilignes qui, formant deux cotés latéraux parallèles chacun à une paroi latérale de la partie arrière, ont, d'une part, leurs extrémités dites extrémités proximales guidées en translation avec la paroi latérale considérée et, d'autre part, leurs autres extrémités dites distales recourbées dans le plan de la paroi frontale pour coopérer avec les moyens de guidage en translation portés par le support et former ainsi la paroi frontale.

L'invention sera bien comprise à l'aide de la description ci-après faite, à titre d'exemple non limitatif, en regard du dessin ci-annexé qui représente schématiquement :
- figure 1 : une vue de profil d'un chariot selon l'invention,
- figure 2: une vue en perspective de l'extrémité avant d'un chariot,
- figure 3 : une vue en perspective d'une variante de l'extrémité d'un chariot,
- figure 4: une représentation schématique de la machine de soudage.

En se reportant au dessin, on voit un chariot 1 utilisé fréquemment dans les magasin de vente en libre service.

Classiquement, un tel chariot 1 comprend un châssis 2 muni de roues 3 portant un panier 4.

Ce panier est généralement obtenu à partir de fils mis en forme pour délimiter le fond 5, la paroi frontale 6, la paroi arrière 7 et les deux parois 8 latérales gauche et droite.

Pour permettre aux chariots de s'emboîter les uns dans les autres, pour les ranger l'un derrière l'autre, notamment, le panier a une section verticale qui, depuis la paroi frontale 6 vers la paroi arrière 7, augmente.

L'espace disponible entre deux chariots est très faible de l'ordre de seize millimètres, ce qui est très faible.

Le fond 5 est également incliné par rapport à l'horizontal en remontant en s'éloignant de l'arrière.

Depuis la paroi frontale, les deux parois latérales divergent et ont une hauteur croissante.

Ainsi, vu de dessus, le panier a une forme de trapèze isocèle, la grande base étant matérialisée par la paroi arrière.

Le volume du panier est modulable et, à cet effet, le panier comprend deux parties, une partie arrière fixe 4A et une partie avant mobile 4B.

Selon une caractéristique de l'invention, la partie avant comprend :
- une paroi inférieure 10 formée essentiellement d'éléments longilignes 10A qui, s'étendant selon l'axe longitudinal du panier, coopèrent par des moyens de guidage 11 en translation selon l'axe longitudinal du panier, avec le fond 5 de la partie arrière,
- prolongeant cette paroi inférieure 10 pour s'étendre dans le plan de la paroi frontale 6, un support 12 portant des moyens de guidage 13 en translation selon un axe horizontal et parallèle à la paroi frontale 6,
- des éléments 14A longilignes qui, formant deux cotés 14 latéraux parallèles chacun à une paroi latérale 8 de la partie arrière 4A, ont, d'une part, leurs extrémités dites extrémités proximales guidées en translation avec la paroi latérale 8 considérée et, d'autre part, leurs autres extrémités dites distales recourbées dans le plan de la paroi frontale pour coopérer avec les moyens de guidage 13 en translation portés par le support 12 et former ainsi la paroi frontale.

Le support 12 est, par exemple, formé à partir des éléments 10A qui sont courbés vers le haut.

Les moyens de guidage 13 portés par le support sont, par exemple, constitués par des tubes 13 ouverts aux deux extrémités dans lesquelles s'engagent les parties recourbées des côtés latéraux.

Ces moyens de guidage 13 constituent également des traverses pour maintenir à l'écartement requis les éléments longilignes 10A et conférer au panier et, notamment en sa partie avant, une rigidité suffisante.

Cette disposition technique permet aux côtés 14 latéraux de la partie avant de rester constamment parallèles aux parois 8 latérales lors du déplacement de la partie avant grâce à la modification automatique de la largeur de la face frontale, lorsque ces côtés latéraux coulissent parallèlement aux parois latérales.

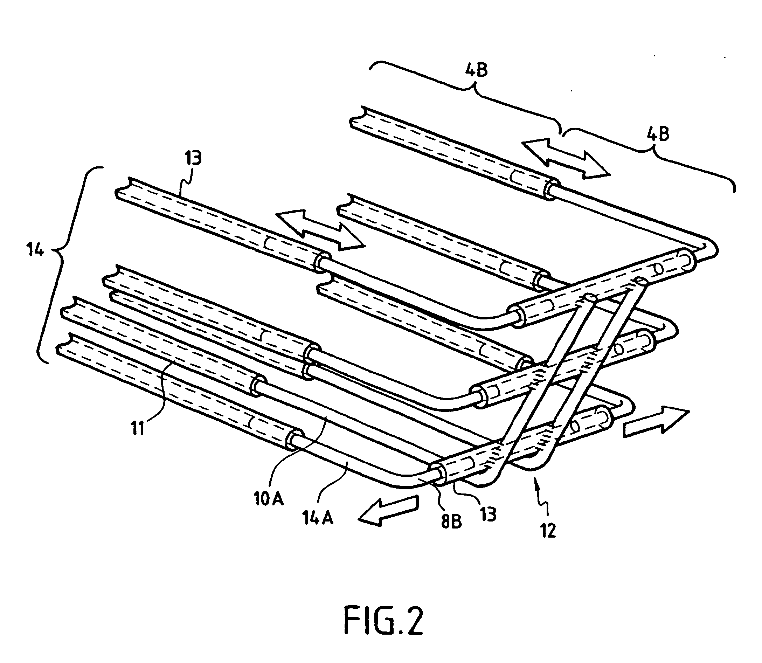

En figure 2, on a représenté les mouvements des divers éléments.

Il s'agit donc de moyens d'ajustement en largeur de la paroi frontale.

En effet, lorsque la paroi frontale s'éloigne de la paroi arrière et, du fait que les parois latérales ne soient pas parallèles, la largeur de cette paroi frontale doit se modifier au cours du déplacement.

Si tel n'était pas le cas les côtés latéraux ne resteraient pas plans mais se cintreraient et ne pourraient peut être plus revenir en position initiale.

Les axes des moyens de guidage des côtés latéraux et des moyens de guidage de la paroi inférieure sont parallèles entre eux et, de préférence, sont parallèles au fond.

Les moyens 11, 13 de guidage en translation des côtés latéraux et/ou de la paroi inférieure seront, de préférence mais non exclusivement, également des tubes.

Ces tubes constituent, par exemple, une portion de la structure du panier ou alors sont rapportés sur l'une des faces interne ou externe de la partie arrière.

Dans le cas du fond, les tubes seront logés à l'intérieur du cadre existant pour ne pas pénaliser l'encombrement.

Le tube a une section circulaire, ovale ou polygonale.

A l'intérieur des tubes on peut prévoir une ou plusieurs bagues pour améliorer le glissement.

Au lieu de tubes, il est possible d'utiliser des glissières mais d'épaisseur réduite.

Bien évidemment, des butées limitent le déplacement relatif des trois parties constituant l'avant du chariot.

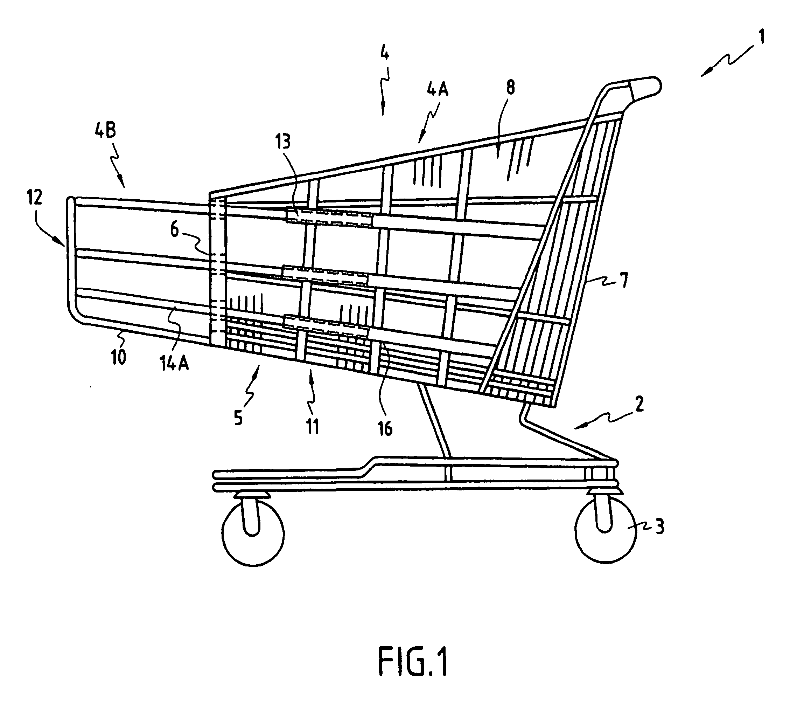

Dans une forme de réalisation (figure 1), la partie avant est rapportée sur un chariot existant et donc présente des moyens d'assemblage avec la structure du chariot.

A cet effet, les moyens de guidage en translation de la paroi inférieure et des côtés latéraux sont par des moyens 16 de fixation rapportés sur les faces correspondantes du chariot.

Par exemple, les tubes de guidages sont portés par des lames support fixées par soudure ou accrochage rapide sur les fils constituant le chariot existant ou alors ces tubes seront directement fixés par soudure sur les côtés.

Il est important que le chariot équipé de ce panier puisse s'emboîter dans un autre chariot et les dispositions précitées le permettent.

Avantageusement, le support 12 qui prolonge la paroi inférieure présente en son bord supérieur, une surface arrondie qui s'étend au moins partiellement le long de ce bord afin de repousser la paroi arrière d'un autre chariot lors de l'emboîtement.

Il est possible de prévoir, sur le support, une plaque avant permettant de recevoir une affiche publicitaire.

L'étendue de cette plaque sera au plus égale à la taille de la surface frontale lorsque la partie avant est la plus éloignée de la partie arrière.

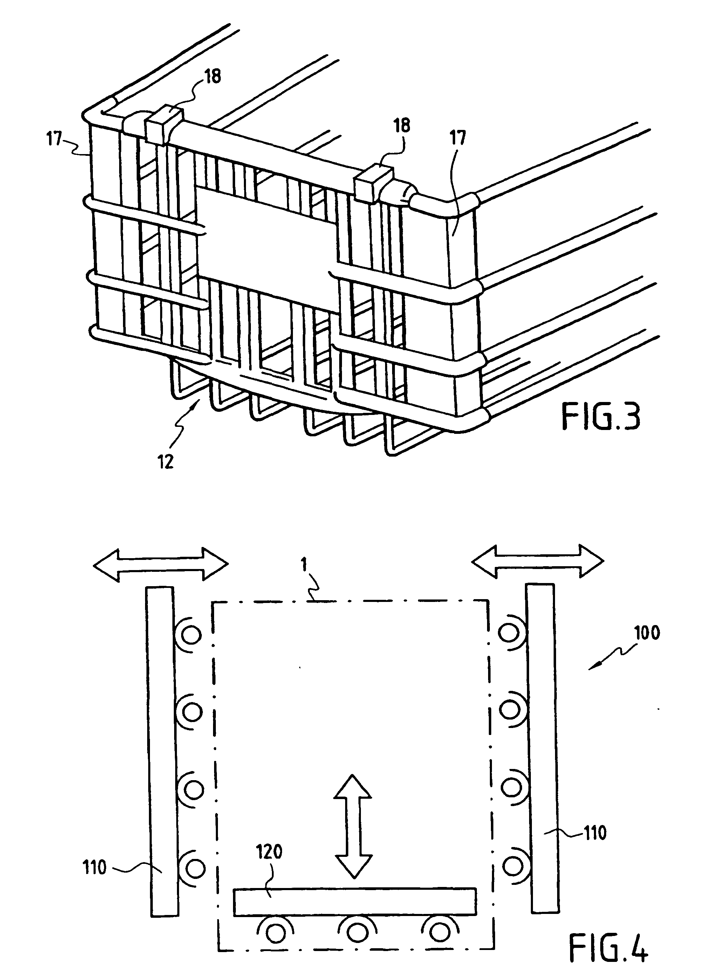

Dans une variante de réalisation (figure 3), le support 12 est une plaque en matériau synthétique sur laquelle se fixe, par exemple, par encliquetage, les extrémités des éléments 10A, lesquels peuvent être courbés.

Ce support 12 présente des pièces 17 de coins en forme de cornière évitant le déboîtement accidentel des parois latérales et donc des extrémités distales 8B qui coopèrent avec les moyens de guidage 13.

Pour éviter que les enfants se coincent les doigts, le support 12 présente des butées 18 tournées vers l'arrière du chariot pour créer un espace entre le support 12 et la paroi frontale 6 lorsque le panier avant est rapporté sur un chariot existant.

Ces butées 18 ne sont pas nécessaires lorsque le support 12 constitue directement la paroi frontale.

Sur des chariots existants, la partie avant mobile sera fixée sur le chariot existant à l'aide d'une machine 100.

Celle-ci comprendra deux bras latéraux 110 agissant comme une pince et plaquant les tubes de guidage sur les faces latérales externes du chariot existant.

Un troisième bras 120 vient plaquer les tubes de guidage à l'intérieur du chariot et sur le fond.

Un robot de soudage se charge ensuite de fixer par soudure les tubes.

Les tubes sont positionnés et maintenus sur les bras latéraux par des moyens appropriés, tels des aimants ou des pinces, le temps suffisant pour souder les dits tubes.

En figure 4, on a représenté schématiquement la machine de soudage.

Le chariot est matérialisé en traits mixtes.

## Revendications

1. Panier pour chariot de magasin en libre service comprenant un fond, une paroi frontale, une paroi arrière et deux parois latérales gauche et droite, avec une section verticale qui, depuis la paroi frontale vers la paroi arrière, augmente suivant les deux axes principaux, ce panier comportant deux parties, une partie arrière fixe et une partie avant mobile,
ce panier étant **CARACTERISE en ce que** la partie avant comprend:
- une paroi inférieure (10) formée essentiellement d'éléments longilignes (10A) qui, s'étendant selon l'axe longitudinal du panier, coopèrent par des moyens de guidage (11) en translation selon l'axe longitudinal du panier, avec le fond (5) de la partie arrière,
- prolongeant cette paroi inférieure (10) pour s'étendre dans le plan de la paroi frontale (6), un support (12) portant des moyens de guidage (13) en translation selon un axe horizontal et parallèle à la paroi frontale (6),
- des éléments (14A) longilignes qui, formant deux cotés (14) latéraux parallèles chacun à une paroi latérale (8) de la partie arrière (4A), ont, d'une part, leurs extrémités dites extrémités proximales guidées en translation avec la paroi latérale (8) considérée et, d'autre part, leurs autres extrémités dites distales recourbées dans le plan de la paroi frontale pour coopérer avec les moyens de guidage (13) en translation portés par le support (12) et former ainsi la paroi frontale.

2. Panier selon la revendication 1 **caractérisé en ce que** les moyens de guidage (13) portés par le support sont constitués par des tubes (13) ouverts aux deux extrémités dans lesquelles s'engagent les parties recourbées des côtés latéraux.

3. Panier selon la revendication 1 **caractérisé en ce que** les moyens de guidage (13) constituent également des traverses pour maintenir à l'écartement requis les éléments longilignes (10A) et conférer au panier et, notamment en sa partie avant, une rigidité suffisante.

4. Panier selon la revendication 1 **caractérisé en ce que** les axes des moyens de guidage des côtés latéraux et des moyens de guidage de la paroi inférieure sont parallèles entre eux et, de préférence, sont parallèles au fond.

5. Panier selon la revendication 1 **caractérisé en ce que** les moyens de guidage en translation des côtés latéraux et/ou de la paroi inférieure sont également des tubes.

6. Panier selon la revendication 5 **caractérisé en ce que** les tubes constituent une portion de la structure du panier.

7. Panier selon la revendication 5 **caractérisé en ce que** les tubes sont rapportés sur l'une des faces interne ou externe de la partie arrière.

8. Panier selon la revendication 1 **caractérisé en ce que** la partie avant est rapportée sur un chariot existant et donc présente des moyens d'assemblage avec la structure du chariot.

9. Panier selon la revendication 1 **caractérisé en ce que** le support (12) présente des pièces (17) de coin.

10. Panier selon la revendication 1 **caractérisé en ce que** le support qui prolonge la paroi inférieure présente en son bord supérieur, une surface arrondie qui s'étend au moins partiellement le long de ce bord afin de repousser la paroi arrière d'un autre chariot lors de l'emboîtement.

## Patentansprüche

1. Korb für Einkaufswagen zur Selbstbedienung, der einen Boden, eine Vorderwand, eine Rückwand sowie eine rechte und eine linke Seitenwand umfaßt, mit einem senkrechten Abschnitt, der von der Vorderwand zu der Rückwand zunimmt, indem er den zwei Hauptachsen folgt, wobei der Korb zwei Teile umfaßt, einen stationären Hinterteil und einen beweglichen Vorderteil, **dadurch gekennzeichnet, daß** der Vorderteil umfaßt:
- eine Unterwand (10), die im wesentlichen aus länglichen Elementen (10A) ausgebildet ist, die, indem sie sich gemäß der Längsachse des Korbs erstrecken, mit Führungsmitteln (11) in Verschiebung gemäß der Längsachse des Korbs mit dem Boden (5) des Hinterteils zusammenarbeiten,
- einen Träger (12), der diese Unterwand (10) verlängert, um sich in der Ebene der Vorderwand (6) zu erstrecken, der Mittel zum Führen (13) in Verschiebung gemäß einer horizontalen Achse und parallel zu der Vorderwand (6) trägt,
- längliche Elemente (14A), die, indem sie zwei seitliche Seiten (14), die jeweils parallel zu einer Seitenwand (8) des Rückteils (4A) sind, bilden, einerseits ihre Enden, proximale Enden genannt, in Verschiebung mit der betreffenden Seitenwand (8) geführt haben und andererseits ihre anderen Enden, distale Enden genannt, in der Ebene der Vorderwand zurückgebogen haben, um mit den Mitteln zum Führen (13) in Verschiebung, die von dem Träger (12) getragen werden, zusammenzuarbeiten und daher die Vorderwand zu bilden.

2. Korb nach Anspruch 1, **dadurch gekennzeichnet, daß** die Führungsmittel (13), die von dem Träger getragen werden, aus Röhren (13) bestehen, die an den zwei Enden, in welche sich die zurückgebogenen Teile der seitlichen Seiten einfügen, offen sind.

3. Korb nach Anspruch 1, **dadurch gekennzeichnet, daß** die Führungsmittel (13) auch Querstreben bilden, um die länglichen Elemente (10A) im erforderten Abstand zu halten und dem Korb und insbesondere in seinem Vorderteil eine ausreichende Steifheit zu verleihen.

4. Korb nach Anspruch 1, **dadurch gekennzeichnet, daß** die Achsen der Führungsmittel der seitlichen Seiten und der Führungsmittel der Unterwand zueinander parallel und bevorzugt zum Boden parallel sind.

5. Korb nach Anspruch 1, **dadurch gekennzeichnet, daß** die Mittel zum Führen in Verschiebung der seitlichen Seiten und/oder der Unterwand ebenfalls Röhren sind.

6. Korb nach Anspruch 5, **dadurch gekennzeichnet, daß** die Röhren einen Abschnitt des Aufbaus des Korbs bilden.

7. Korb nach Anspruch 5, **dadurch gekennzeichnet, daß** die Röhren auf einer der Innen- oder der Außenseiten des Hinterteils angebaut sind.

8. Korb nach Anspruch 1, **dadurch gekennzeichnet, daß** der Vorderteil an einen existierenden Wagen angebaut ist und daher Mittel zum Zusammenfügen mit dem Korbaufbau aufweist.

9. Korb nach Anspruch 1, **dadurch gekennzeichnet, daß** der Träger (12) Eckteile (17) aufweist.

10. Korb nach Anspruch 1, **dadurch gekennzeichnet, daß** der Träger, der die Unterwand verlängert, an seiner oberen Kante eine gerundete Fläche aufweist, die sich zumindest teilweise entlang dieser Kante erstreckt, um die Rückwand eines anderen Wagens beim Verschachteln zurückzuschieben.

## Claims

1. A basket for a trolley for a self-service store, comprising a base, a front wall, a rear wall and two lateral, left and right, walls, with a vertical section which, from the front wall to the rear wall, increases along the two main axes, this basket comprising two parts, a fixed rear part and a mobile front part,
this basket being **CHARACTERISED IN THAT** the front part comprises:
- a lower wall (10) formed essentially of elongate elements (10A) which, extending along the longitudinal axis of the basket, cooperate, by means (11) for guiding in translation along the longitudinal axis of the basket, with the base (5) of the rear part,
- continuing this lower wall (10) to extend in the plane of the front wall (6), a support (12) bearing means (13) for guiding in translation along a horizontal axis parallel to the front wall (6),
- elongate elements (14A) which, forming two lateral sides (14) each parallel to a lateral wall (8) of the rear part (4A), have firstly what are called their proximal ends guided in translation with the lateral wall (8) in question and, secondly, their other, what are called distal, ends curved in the plane of the front wall to cooperate with the means (13) for guiding in translation borne by the support (12) and thus to form the front wall.

2. A basket according to Claim 1, **characterised in that** the guide means (13) borne by the support are formed by tubes (13) open at both ends in which the curved parts of the lateral sides engage.

3. A basket according to Claim 1, **characterised in that** the guide means (13) also form crossbars for holding the elongate elements (10A) at the distance required and for imparting sufficient rigidity to the basket and in particular in its front part.

4. A basket according to Claim 1, **characterised in that** the axes of the guide means for the lateral sides and the guide means for the lower wall are parallel to one another and, preferably, are parallel to the base.

5. A basket according to Claim 1, **characterised in that** the means for guiding in translation of the lateral sides and/or of the lower wall are also tubes.

6. A basket according to Claim 5, **characterised in that** the tubes constitute a portion of the structure of the basket.

7. A basket according to Claim 5, **characterised in that** the tubes are attached to one of the inner or outer faces of the rear part.

8. A basket according to Claim 1, **characterised in that** the front part is attached to an existing trolley and therefore has means for assembling with the structure of the trolley.

9. A basket according to Claim 1, **characterised in that** the support (12) has corner pieces (17).

10. A basket according to Claim 1, **characterised in that** the support which continues the lower wall has on its upper edge a rounded surface which extends at least partially along this edge in order to push back the rear wall of another trolley when being nested.
